# EUROPÄISCHE PATENTSCHRIFT

(11) **EP 2 996 855 B1**
(45) Veröffentlichungstag und Bekanntmachung des Hinweises auf die Patenterteilung: **12.07.2017**
(21) Anmeldenummer: 14724064.2
(22) Anmeldetag: 12.05.2014
(51) Int. Cl.: B29C 43/18, B29C 43/36

(54) **VERFAHREN UND VORRICHTUNG ZUM VERPRESSEN EINER DICHTUNGSMASSE AUF DER INNENSEITE EINES DECKELS FÜR BEHÄLTER**
METHOD AND DEVICE FOR PRESSING A SEALING COMPOUND ON THE INSIDE OF A LID FOR CONTAINERS
PROCÉDÉ ET DISPOSITIF POUR PRESSER UNE MATIÈRE D'ÉTANCHÉITÉ SUR UN CÔTÉ INTÉRIEUR D'UN COUVERCLE POUR UN RÉCIPIENT

(30) Priorität: 13.05.2013 DE 102013008045
(43) Veröffentlichungstag der Anmeldung: 23.03.2016
(73) Patentinhaber: Saeta GmbH & Co. KG, 22880 Wedel (DE)
(72) Erfinder: NEBEN, Helmuth, 22393 Hamburg (DE)
(74) Vertreter: Hauck Patentanwaltspartnerschaft mbB
(86) Internationale Anmeldenummer: PCT/EP2014/059630
(87) Internationale Veröffentlichungsnummer: WO 2014/184131

(56) Entgegenhaltungen:
- EP-A1- 2 090 416
- EP-B1- 1 814 705
- WO-A2-2009/130567
- DE-A1- 10 352 672
- US-A- 4 274 822

## Beschreibung

Die Erfindung betrifft ein Verfahren zum Verpressen einer Dichtungsmasse auf der Innenseite eines Deckels für Behälter, wobei sich auf dem Deckelboden ein ringartiges Gebilde aus plastifizierter Dichtungsmasse befindet, welches mittels eines ringförmigen Pressstempels flach auf den Deckelboden und an die sich an den Deckelboden anschließende Deckelwand gepresst wird. Außerdem betrifft die Erfindung eine Vorrichtung zum Verpressen einer Dichtungsmasse auf der Innenseite eines Deckels für Behälter.

Bei den Behältern kann es sich beispielsweise um Lebensmittelbehälter handeln, beispielsweise Baby-Food-Behälter oder Ähnliches. Unter dem Markennamen Twist-Off (TO) sind zum einen Deckel bekannt mit Nocken im Bereich der Innenseite der Deckelwand. Die Nocken wirken mit einem korrespondierenden Gewinde des Behälters zusammen. Bei solchen Deckeln wird die Dichtungsmasse angrenzend zur Deckelwand flächig im Wesentlichen nur auf den Deckelboden aufgebracht. Ein Verfahren und eine Vorrichtung zum Aufbringen und Verpressen der Dichtungsmasse bei solchen Deckeln ist beispielsweise bekannt aus DE 10 2009 040 802 A1.

Zum anderen sind unter dem Markennamen Press On Twist-Off (PT) Deckel ohne Nocken bekannt. Bei solchen Deckeln muss die Dichtungsmasse zusätzlich zu dem an die Deckelwand angrenzenden Bereich des Deckelbodens auch auf die Innenseite der Deckelwand flächig aufgebracht werden. In diesem Bereich wird beim Aufpressen des Deckels auf einen Behälter ein Gewinde in der Dichtungsmasse ausgebildet. Um die Dichtungsmasse auch an der Deckelwand zu verteilen, muss der eingesetzte Pressstempel das auf den Deckelboden abgelegte ringartige Gebilde aus plastifizierter Dichtungsmasse so verdrängen, dass die Dichtungsmasse auch an der Wand hochgedrückt wird. Ein Problem stellen dabei Lufteinschlüsse in einem kritischen Bereich dar, also einem Bereich, in dem die Dichtung keine durch einen Lufteinschluss hervorgerufene Elastizität aufweisen darf. Dies gilt insbesondere für den Übergang zwischen Deckelboden und Deckelwand.

US-A-4 274 822 offenbart ein Verfahren zum Verpressen einer Dichtungsmasse auf der Innenseite eines Deckels für Behälter, wobei die Dichtungsmasse mittels eines inneren Pressstempels flach auf den Deckelboden und an die anschliessende Deckelwand gepresst wird. Ausgehend von dem erläuterten Stand der Technik liegt der Erfindung die Aufgabe zugrunde, ein Verfahren und eine Vorrichtung der eingangs genannten Art bereitzustellen, mit denen Lufteinschlüsse beim Aufbringen der Dichtungsmasse auf den Deckelboden und an die Deckelwand sicher vermieden werden.
Die Erfindung löst die Aufgabe durch die Gegenstände der unabhängigen Ansprüche 1 und 10. Vorteilhafte Ausgestaltungen finden sich in den abhängigen Ansprüchen, der Beschreibung und den Figuren.
Die Erfindung löst die Aufgabe einerseits durch ein Verfahren zum Verpressen einer Dichtungsmasse auf der Innenseite eines Deckels für Behälter, wobei sich auf dem Deckelboden ein ringartiges Gebilde aus plastifizierter Dichtungsmasse befindet, welches mittels eines ringförmigen Pressstempels flach auf den Deckelboden und an die sich an den Deckelboden anschließende Deckelwand gepresst wird, wobei der ringförmige Pressstempel zwischen einem radial innen vom Pressstempel angeordneten inneren Formteil und einem radial außen vom Pressstempel angeordneten und einen ringförmigen Spalt zum Deckelboden bildenden ringförmigen äußeren Formteil in Richtung des Deckelbodens auf das ringartige Gebilde aus plastifizierter Dichtungsmasse gepresst wird, wobei die plastifizierte Dichtungsmasse in den Spalt und radial nach außen durch den ringförmigen Spalt auf den Deckelboden und an die sich an den Deckelboden anschließende Deckelwand gepresst wird.

Zum anderen löst die Erfindung die Aufgabe durch eine Vorrichtung zum Verpressen einer Dichtungsmasse auf der Innenseite eines Deckels für Behälter, umfassend:
- einen ringförmigen Pressstempel,
- ein radial innen vom Pressstempel angeordnetes inneres Formteil,
- ein radial außen vom Pressstempel angeordnetes und einen ringförmigen Spalt zum Deckelboden bildendes ringförmiges äußeres Formteil,
- wobei der Pressstempel zwischen dem inneren Formteil und dem ringförmigen äußeren Formteil in Richtung des Deckelbodens auf ein sich auf dem Deckelboden befindendes ringartiges Gebilde aus plastifizierter Dichtungsmasse gepresst werden kann, so dass die plastifizierte Dichtungsmasse in den Spalt und radial nach außen durch den ringförmigen Spalt auf den Deckelboden und an die sich an den Deckelboden anschließende Deckelwand gepresst wird.

Der erfindungsgemäß mit der Dichtungsmasse zu versehende Deckel besitzt einen Deckelboden und eine Deckelwand. Der Deckelboden kann beispielsweise kreisförmig sein. Die Deckelwand läuft ringförmig, insbesondere kreisringförmig, um den Deckelboden um. Die Deckelwand kann sich senkrecht zum Deckelboden erstrecken oder unter einem anderen Winkel oder auch gekrümmt. An ihrem die Öffnung des Deckels begrenzenden Ende kann die Deckelwand eine ringförmige Verdickung, insbesondere eine Anrollung, aufweisen. All dies ist an sich bekannt und soll daher nicht näher erläutert werden. Der Deckel kann zum Beispiel für Lebensmittelbehälter, insbesondere für Baby-Food-Behälter oder Ähnliches vorgesehen sein. Es kann sich um einen unter dem Markennamen Press On Twist-Off (PT) bekannten Deckel ohne Nocken handeln. Natürlich kann es sich auch um einen Nockendeckel oder einen Deckel mit Gewinde handeln, bei denen Dichtungsmasse auf die Deckelwand aufzubringen ist.

Erfindungsgemäß sind ein inneres Formteil und ein ringförmiges äußeres Formteil vorgesehen, zwischen denen der ringförmige Pressstempel in Axialrichtung beweglich geführt ist. Zumindest zwischen dem dem Deckelboden zugewandten Ende des ringförmigen äußeren Formteils und dem Deckelboden besteht ein ringförmig umlaufender Spalt. Der Pressstempel wird in dem ringförmigen Freiraum zwischen dem inneren und dem äußeren Formteil in Axialrichtung bewegt. Dabei kann der zwischen dem inneren und äußeren Formteil gebildete Freiraum insbesondere derart ausgebildet sein, dass zwischen den Wänden des Pressstempels und dem inneren bzw. äußeren Formteil im Wesentlichen kein Abstand besteht. Dadurch wird ein Eintreten von Dichtungsmasse in den Bereich zwischen Presstempel und innerem bzw. äußerem Formteil im Zuge des Verpressens sicher verhindert.

Auf dem Deckelboden befindet sich ein ringartiges Gebilde, welches in einer vorausgehenden Applikatorstation auf dem Deckelboden abgelegt wurde und sich im plastifizierten Zustand befindet. Das ringartige Gebilde kann ein geschlossener Ring aus plastifiziertem Material sein, insbesondere ein O-Ring. Das ringartige Gebilde kann aber auch ein nicht-geschlossenes Gebilde, also mit einer oder mehreren Unterbrechungen der Ringform sein, welches Gebilde dann zu einer geschlossenen Ringkontur verpresst wird. Insbesondere können vor dem Verpressen mehrere Abschnitte aus plastifizierter Dichtungsmasse entlang einer Ringform, jedoch in Umfangsrichtung der Ringform beabstandet zueinander auf dem Deckelboden abgelegt worden sein. Das ringartige Gebilde aus Dichtungsmasse erstreckt sich ausgehend von dem Deckelboden höher als die Höhe des ringförmigen Spalts zwischen dem Deckelboden und dem äußeren Formteil. Sofern das ringartige Gebilde einen kreisförmigen Querschnitt besitzt, ist also der Durchmesser des ringartigen Gebildes größer als der Abstand zwischen Deckelboden und äußerem Formteil. Das ringartige Gebilde aus plastifizierter Dichtungsmasse befindet sich vor dem Verpressen zwischen dem dem Deckelboden zugewandten Ende des Pressstempels und dem Deckelboden. Durch den in Axialrichtung auf den Deckelboden zu bewegten Pressstempel wird die plastifizierte Dichtungsmasse in den Spalt zwischen dem Deckelboden und dem äußeren Formteil hinein und teilweise durch den Spalt hindurch radial nach außen gepresst. Dabei wird die Dichtungsmasse flach verformt. Nach dem Verpressen befindet sich eine flache Schicht aus Dichtungsmasse einerseits in dem ringförmigen Spalt zwischen dem Deckelboden und dem äußeren Formteil sowie radial außen von dem ringförmigen Spalt auf den Deckelboden und andererseits an der angrenzenden Innenfläche der Deckelwand und haftet dort an.

Das innere Formteil kann sich bis auf den Deckelboden erstrecken und damit eine geschlossene Begrenzung nach innen bilden. In diesem Fall gelang keine Dichtungsmasse in den durch das innere Formteil bedeckten Bereich des Deckelbodens. Es ist aber auch möglich, dass das innere Formteil ebenfalls einen Spalt zum Deckelboden bildet. In diesem Fall gelangt beim Verpressen auch Dichtungsmasse in den Bereich des Deckelbodens, über dem sich das innere Formteil befindet. Es ist dann insbesondere möglich, dass nach dem Verpressen die gesamte Fläche des Deckelbodens oder zumindest ein Teil der Fläche des Deckelbodens mit Dichtungsmasse bedeckt ist. Das innere Formteil kann durch geeignete Antriebsmittel auch in Axialrichtung bewegbar sein, so dass je nach Anwendungsfall zwischen den erläuterten Verfahrensalternativen gewechselt werden kann.

Der Applikator, der einen räumlich getrennten Bestandteil der erfindungsgemäßen Vorrichtung bilden kann, kann im Prinzip ausgebildet sein wie an sich bekannt aus DE 10 2009 040 802 A1. Durch diese Ausgestaltung wird ein besonders einfaches Ablegen des ringartigen Gebildes auf dem Deckelboden unter sicherer Vermeidung von Anhaftungen an dem Applikator erreicht. Die jeweils erforderliche Geschwindigkeit für die Verringerung der Spaltbreite und das Auspressen der Dichtungsmasse kann durch den Fachmann empirisch ermittelt werden. Sie hängt unter anderem von den Dimensionen des Applikators und dem auszubildenden ringartigen Gebilde ab.

In dem Applikator kann das ringartige Gebilde aus Dichtungsmasse radial weiter innen auf dem Deckelboden abgelegt werden als beim Stand der Technik. Es wird eine Kammer gebildet, begrenzt durch den Pressstempel, den Deckelboden sowie inneres und äußeres Formteil, mit einem schmalen Ausgang nach außen, gebildet durch den Spalt zwischen dem äußeren Formteil und dem Deckelboden. In dieser Kammer befindet sich die Dichtungsmasse vor dem Verpressen. Durch den Spalt wird die Dichtungsmasse dann mittels des Pressstempels aus der Kammer radial nach außen und an die Deckelwand gepresst. Dabei wird die Dichtungsmasse ausgehend von dem Deckelboden in Richtung der Deckelöffnung bewegt. Die Verteilung der Dichtungsmasse ist erfindungsgemäß im Vergleich zum Stand der Technik folglich invers, nämlich nicht durch Druck von oben in Richtung des Deckelbodens mit entsprechender Verformung der Dichtungsmasse, sondern durch Einströmen in einen zwischen dem äußeren Formteil und der Deckelwand gebildeten Freiraum mit einer Fließrichtung zu der Deckelöffnung. Dadurch werden erfindungsgemäß Lufteinschlüsse, wie sei beim Stand der Technik auftreten können, sicher verhindert.

Darüber hinaus führt das erfindungsgemäße Verfahren zu einer weiteren Scherung der plastifizierten Dichtungsmasse. Hierdurch wird die Viskosität der Dichtungsmasse verringert, was zusätzlich bei der dünnen Beschichtung der Innenseite der Deckelwand hilft. Diese weitere Scherung verbessert die Aufbringbarkeit der Dichtungsmasse gegenüber der beim Ablegen des ringartigen Gebildes auf dem Deckelboden bereits auftretenden massiven Scherung im Applikator.

Wenn der Pressstempel vollständig auf den Deckelboden bewegt wird, verbleibt zwischen dem Pressstempel und dem Deckelboden nur eine minimale Menge an Dichtungsmasse. Es kann aber natürlich auch eine größere Menge an Dichtungsmasse zwischen dem Pressstempel und dem Deckelboden verbleiben, insbesondere wenn der Pressstempel nicht vollständig auf den Deckelboden bewegt wird. Nach dem Verpressen werden der Pressstempel sowie das innere und äußere Formteil entfernt.

Wie bereits erläutert, kann die plastifizierte Dichtungsmasse durch den ringförmigen Spalt hindurch insbesondere in einen zwischen dem ringförmigen äußeren Formteil und der Deckelwand gebildeten ringförmigen Freiraum ausgehend von dem Deckelboden in Richtung des Öffnung des Deckels an die Deckelwand gepresst werden. Lufteinschlüsse werden so besonders sicher verhindert. Weiterhin kann zwischen dem ringförmigen äußeren Formteil und dem dem Deckelboden abgewandten Ende der Deckelwand ein Spalt mit einer Breite von weniger als 0,1 mm, vorzugsweise weniger als 0,05 mm, bestehen. Als besonders geeignet hat sich diesbezüglich ein Spalt mit einer Breite von 0,01 mm bis 0,03 mm erwiesen. Bei dieser vorteilhaften Ausgestaltung bildet der Freiraum bis auf den Spalt im Bereich der Deckelöffnung eine im Wesentlichen geschlossene Kammer. Der kleine Spalt stellt sicher, dass die beim Einströmen der plastifizierten Dichtungsmasse in den Freiraum verdrängte Luft nach außen entweichen kann. Gleichzeitig ist der Spalt allerdings ausreichend klein, so dass die plastifizierte Dichtungsmasse insbesondere aufgrund ihrer vergleichsweise hohen Viskosität nicht durch den Spalt fließt. Vielmehr wird die erfindungsgemäß verpresste Dichtungsmasse bei dieser Ausgestaltung des Freiraums als bis auf den Spalt geschlossene Kammer einem erheblichen Druck ausgesetzt, der das Anhaften der Dichtungsmasse insbesondere an der Deckelwand weiter verbessert. Wichtig ist dabei, dass das Volumen an auf den Deckelboden aufgebrachter und anschließend zu verpressender plastifizierter Dichtungsmasse möglichst genau einem zuvor ermittelten Sollwert entspricht. Anderenfalls kann der im Zuge des Verpressens auftretende Druck unerwünscht hoch oder unerwünscht niedrig sein. Es muss also eine exakte Dosierung der plastifizierten Dichtungsmasse erfolgen.

Nach einer weiteren Ausgestaltung kann ein an die Deckelwand angrenzender ringförmiger Bereich des Deckelbodens gegenüber einem radial inneren Bereich des Deckelbodens vertieft sein. Häufig weisen derartige Deckel radial außen einen ringförmig vertieften Bereich auf. Das ringartige Gebilde aus Dichtungsmasse kann in dem Applikator dann zumindest teilweise im Bereich der Vertiefung des Deckelbodens abgelegt werden. Das äußere Formteil ist dann im Bereich der ringförmigen Vertiefung des Deckelbodens angeordnet.

Nach einer weiteren Ausgestaltung kann die plastifizierte Dichtungsmasse nach dem Pressen mit dem ringförmigen Pressstempel im Wesentlichen die gesamte Innenseite der Deckelwand bedecken. Gerade, wenn es sich bei dem Deckel um einen nockenlosen Deckel, insbesondere einen unter dem Markennamen Press On Twist-Off (PT) bekannten Deckel, handelt, ist eine solche Ausgestaltung vorteilhaft, da bei solchen Deckeln sich das Gewinde in der Dichtungsmasse selbst abbildet. Indem die gesamte Deckelwand bedeckt ist, steht ein besonders großer Bereich für die Gewindeformung und Dichtung zur Verfügung.

Nach einer weiteren Ausgestaltung kann vorgesehen sein, dass der Pressstempel und/oder das innere Formteil und/oder das äußere Formteil auf eine solche Temperatur gekühlt sind, dass ein Anhaften der plastifizierten Dichtungsmasse verhindert wird. Die Dichtungsmasse ist auf eine ausreichende Temperatur erwärmt, um fließfähig zu sein. Auch der Deckel kann auf eine vorgegebene Temperatur erwärmt sein, um ein Anhaften der Schmelze aus Dichtungsmasse zu verbessern. Nach dem Aufbringen auf den Deckelboden und die Deckelwand erkaltet die Dichtungsmasse und gegebenenfalls der Deckel und die Dichtungsmasse haftet an der Oberfläche des Deckels an. Durch geeignete Kühlung der erfindungsgemäß mit der Dichtungsmasse in Kontakt kommenden Bauteile werden unerwünschte Anhaftungen von Dichtungsmasse an diesen Bauteilen sicher verhindert.

Ein Ausführungsbeispiel der Erfindung wird nachfolgend anhand von Figuren näher erläutert. Es zeigen schematisch:
- Figur 1: einen Ausschnitt einer erfindungsgemäßen Vorrichtung in einem ersten Betriebszustand in einer Schnittansicht, und
- Figur 2: die Darstellung aus Figur 1 in einem zweiten Betriebszustand.

Soweit nichts anderes angegeben ist, bezeichnen in den Figuren gleiche Bezugszeichen gleiche Gegenstände. In den Figuren ist ein Deckel für einen Behälter gezeigt, beispielsweise für einen Lebensmittelbehälter, wie einen Baby-Food-Behälter oder Ähnliches. Der Deckel besitzt einen beispielsweise kreisförmigen Deckelboden 10 und eine ringförmig, beispielsweise kreisringförmig, um den Deckelboden 10 umlaufende Deckelwand 12. An ihrem die Öffnung des Deckels begrenzenden Ende besitzt die Deckelwand 12 eine beispielsweise kreisringförmige Anrollung 14. Darüber weist der Deckelboden 10 einen an die Deckelwand 12 angrenzenden und gegenüber dem übrigen Deckelboden vertieften ringförmigen Bereich 16 auf. Bei dem Deckel 10 handelt es sich insbesondere um einen unter dem Markennamen Press On Twist-Off (PT) bekannten Deckel ohne Nocken.

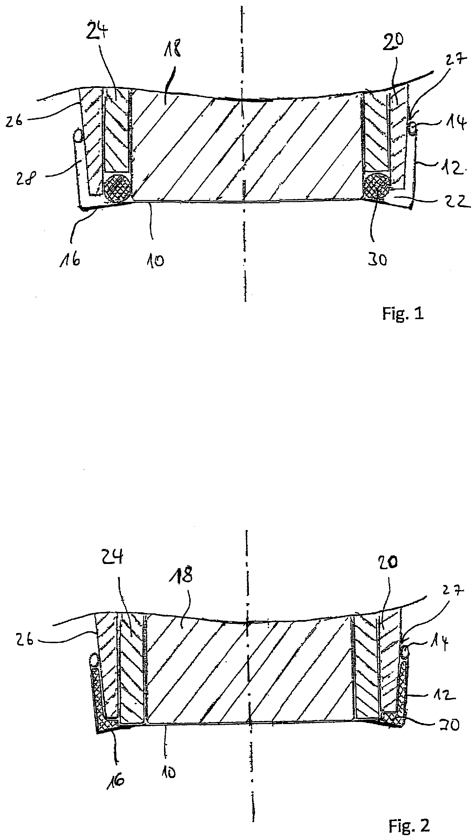

In den Figuren ist darüber hinaus ein sich in dem gezeigten Beispiel bis auf den Deckelboden 10 erstreckendes inneres Formteil 18 zu erkennen. Es ist aber auch möglich, dass sich das innere Formteil 18 nicht bis auf den Deckelboden 10 erstreckt, zwischen dem inneren Formteil 18 und dem Deckelboden 10 also ein Spalt gebildet ist. Auch ist es möglich, dass das innere Formteil 18 in geeigneter Weise in Axialrichtung verfahren werden kann, um wahlweise einen Spalt zwischen innerem Formteil 18 und Deckelboden 10 zu bilden oder nicht. Darüber hinaus ist ein das innere Formteil 18 ringförmig umgebendes äußeres Formteil 20 zu erkennen. Zwischen dem dem Deckelboden 10 zugewandten Ende des ringförmigen äußeren Formteils 20 und dem Deckelboden 10, vorliegend insbesondere dem vertieften Bereich 16, ist ein ringförmiger Spalt 22 gebildet. Darüber hinaus ist in den Figuren zu erkennen, dass zwischen der Außenwand des inneren Formteils 18 und der Innenwand des ringförmigen äußeren Formteils 20 ein Freiraum gebildet ist, in dem ein ringförmiger Pressstempel 24 in Axialrichtung beweglich geführt ist. Insbesondere kann der Pressstempel 24 mittels eines nicht näher gezeigten Antriebs aus der in Figur 1 gezeigten Stellung in Axialrichtung auf den Deckelboden 10 verfahren werden, wie weiter unten noch näher erläutert werden wird.

In den Figuren ist außerdem zu erkennen, dass zwischen der inneren Wand des ringförmigen Pressstempels 24 und der äußeren Wand des inneren Formteils 18 und zwischen der äußeren Wand des Pressstempels 24 und der inneren Wand des äußeren Formteils 20 im Wesentlichen kein Abstand besteht. Außerdem ist zu erkennen, dass die Außenwand 26 des ringförmigen äußeren Formteils 20 mehr oder weniger parallel zu der Deckelwand 12 verläuft und sich bis auf einen schmalen weiteren Spalt 27 bis zu der ringförmigen Anrollung 14 der Deckelwand erstreckt. Auf diese Weise wird ein mit dem Spalt 22 zwischen dem Deckelboden 10 und dem äußeren Formteil 20 verbundener ringförmiger Freiraum 28 zwischen der Außenwand 26 des äußeren Formteils 20 und der Innenseite der Deckelwand 12 gebildet. Der Freiraum 28 bildet bis auf den im Bereich der Deckelöffnung zwischen dem äußeren Formteil 20 und der Innenseite der Deckelwand 12 gebildeten Spalt 27 eine geschlossene Kammer. Der Spalt 27 zwischen dem äußeren Formteil 20 und der Innenseite der Deckelwand 12 besitzt eine geringe Breite von beispielsweise weniger als 0,05 mm, insbesondere in einem Bereich von 0,01 mm bis 0,03 mm. Natürlich kann der Spalt 27 auch zwischen einem entsprechend verdickten Bereich des äußeren Formteils 20 und der Innenseite der Deckelwand 12 gebildet sein, beispielsweise wenn die Innenseite der Deckelwand 12 keine oder keine ausreichende Anrollung besitzt. Auch denkbar ist, dass zur Formung des Spalts 27 ein weiteres ringförmiges und konzentrisch zu dem äußeren Formteil 20 angeordnetes Teil vorgesehen ist, welches beispielsweise in Axialrichtung beweglich außen auf dem äußeren Formteil 20 angeordnet ist.

In Figur 1 ist außerdem ein ringartiges Gebilde aus plastifizierter Dichtungsmasse 30 gezeigt, welches in einer nicht gezeigten, räumlich getrennten Applikatorstation mittels eines ebenfalls nicht gezeigten Applikators auf dem Deckelboden 10 abgelegt wurde. Das ringartige Gebilde kann wie oben erläutert ein geschlossener Ring aus plastifizierter Dichtungsmasse sein. Es ist aber auch möglich, dass das ringartige Gebilde ein nicht-geschlossener Ring aus plastifizierter Dichtungsmasse ist, bei dem einzelne Abschnitte aus plastifizierter Dichtungsmasse entlang einer Ringform, jedoch beabstandet zueinander abgelegt wurden. Das ringartige Gebilde aus plastifizierter Dichtungsmasse 30 wurde in dem gezeigten Beispiel in dem vertieften Bereich 16 des Deckelbodens auf den Deckelboden 10 abgelegt. Dabei befindet sich das ringartige Gebilde aus plastifizierter Dichtungsmasse 30 unmittelbar unterhalb des ringförmigen Pressstempels 24 und zwischen dem inneren Formteil 18 und dem ringförmigen äußeren Formteil 20. Wie zu erkennen, wird in der Ausgangsstellung der Figur 1 eine weitere Kammer gebildet, begrenzt durch den Pressstempel 24, den Deckelboden 10 sowie inneres und äußeres Formteil 18, 20. Die Kammer besitzt einen schmalen Ausgang nach außen, gebildet durch den Spalt 22 zwischen dem äußeren Formteil 20 und dem Deckelboden 10. In dieser Kammer befindet sich das ringartige Gebilde aus plastifizierter Dichtungsmasse in der Ausgangsstellung in Figur 1 vor dem Verpressen.

Zum Verpressen wird der Pressstempel 24 in Axialrichtung zum Deckelboden 10, in Figur 1 also von oben nach unten, verfahren. Dadurch wird die plastifizierte Dichtungsmasse aus der Kammer nach außen in den Spalt 22 zwischen dem äußeren Formteil 20 und dem Deckelboden 10 und durch diesen Spalt 22 hindurch in den ebenfalls eine Kammer bildenden Freiraum 28 gedrückt, wie in Figur 2 zu erkennen. Die plastifizierte Dichtungsmasse 30 wird dabei ausgehend von dem Deckelboden 10, insbesondere dem vertieften Bereich 16, in Richtung der Deckelöffnung, in Figur 2 also nach oben, in den Freiraum 28 hinein und an die Deckelwand 12 gepresst. Durch den schmalen Spalt zwischen dem äußeren Formteil 20 und der Innenseite der Deckelwand 12 kann die dabei verdrängte Luft entweichen. Dichtungsmasse kann jedoch nicht durch diesen Spalt gelangen. Die Dichtungsmasse 30 wird daher während des Verpressens einem erheblichen Druck ausgesetzt, der ein Anhaften der Dichtungsmasse 30 an der Deckelwand 12 befördert. Durch das Einströmen der Dichtungsmasse 30 in den Freiraum 28 von unten werden Lufteinschlüsse zwischen der Dichtungsmasse 30 und der Deckelwand 12 bzw. dem Deckelboden 10, insbesondere am Übergang zwischen dem vertieften Bereich 16 und der Deckelwand 12, sicher vermieden. Es wird vielmehr eine Beschichtung des vertieften Bereichs 16 des Deckelbodens 10 sowie im Wesentlichen der gesamten Innenfläche der Deckelwand 12 erreicht.

Außerdem kommt es durch die erfindungsgemäße Ausgestaltung zu einer zusätzlichen Scherung der plastifizierten Dichtungsmasse 30, wodurch die Viskosität der Dichtungsmasse 30 herabgesetzt wird und die dünne Beschichtung insbesondere der Deckelwand 12 weiter verbessert wird.

## Patentansprüche

1. Verfahren zum Verpressen einer Dichtungsmasse (30) auf der Innenseite eines Deckels für Behälter mit einem Deckelboden (10) und einer Deckelwand (12), wobei sich auf dem Deckelboden (10) ein ringartiges Gebilde aus plastifizierter Dichtungsmasse (30) befindet, welches mittels eines ringförmigen Pressstempels (24) flach auf den Deckelboden (10) und an die sich an den Deckelboden (10) anschließende Deckelwand (12) gepresst wird, **dadurch gekennzeichnet, dass** der ringförmige Pressstempel (24) zwischen einem radial innen vom Pressstempel (24) angeordneten inneren Formteil (18) und einem radial außen vom Pressstempel (24) angeordneten und einen ringförmigen Spalt (22) zum Deckelboden (10) bildenden ringförmigen äußeren Formteil (20) in Richtung des Deckelbodens (10) auf das ringartige Gebilde aus plastifizierter Dichtungsmasse (30) gepresst wird, wobei die plastifizierte Dichtungsmasse (30) in den Spalt (22) und radial nach außen durch den ringförmigen Spalt (22) auf den Deckelboden (10) und an die sich an den Deckelboden (10) anschließende Deckelwand (12) gepresst wird.

2. Verfahren nach Anspruch 1, **dadurch gekennzeichnet, dass** sich das innere Formteil (18) bis auf den Deckelboden (10) erstreckt.

3. Verfahren nach Anspruch 1, **dadurch gekennzeichnet, dass** das innere Formteil (18) ebenfalls einen Spalt zum Deckelboden (10) bildet und somit auch der Deckelboden (10) mit Dichtungsmasse beschichtet wird.

4. Verfahren nach einem der vorhergehenden Ansprüche, **dadurch gekennzeichnet, dass** die plastifizierte Dichtungsmasse (30) durch den ringförmigen Spalt (22) hindurch in einen zwischen dem ringförmigen äußeren Formteil (20) und der Deckelwand (12) gebildeten ringförmigen Freiraum (28) in Richtung der Öffnung des Deckels an die Deckelwand (12) gepresst wird.

5. Verfahren nach Anspruch 4, **dadurch gekennzeichnet, dass** zwischen dem ringförmigen äußeren Formteil (20) und dem dem Deckelboden (10) abgewandten Ende der Deckelwand (12) ein Spalt (27) mit einer Breite von weniger als 0,1 mm, vorzugsweise weniger als 0,05 mm, besteht.

6. Verfahren nach einem der vorhergehenden Ansprüche, **dadurch gekennzeichnet, dass** ein an die Deckelwand (12) angrenzender ringförmiger Bereich (16) des Deckelbodens (10) gegenüber einem radial inneren Bereich des Deckelbodens (10) vertieft ist.

7. Verfahren nach einem der vorhergehenden Ansprüche, **dadurch gekennzeichnet, dass** die plastifizierte Dichtungsmasse (30) nach dem Pressen mit dem ringförmigen Presstempel (24) im Wesentlichen die gesamte Innenseite der Deckelwand (12) bedeckt.

8. Verfahren nach einem der vorhergehenden Ansprüche, **dadurch gekennzeichnet, dass** der Deckel ein nockenloser Deckel ist.

9. Verfahren nach einem der vorhergehenden Ansprüche, **dadurch gekennzeichnet, dass** der Pressstempel (24) und/oder das innere Formteil (18) und/oder das äußere Formteil (20) auf eine solche Temperatur gekühlt sind, dass ein Anhaften der plastifizierten Dichtungsmasse (30) verhindert wird.

10. Vorrichtung zum Verpressen einer Dichtungsmasse (30) auf der Innenseite eines Deckels für Behälter mit einem Deckelboden (10) und einer Deckelwand (12), umfassend:
- einen ringförmigen Pressstempel (24),
- ein radial innen vom Pressstempel (24) angeordnetes inneres Formteil (18),
- ein radial außen vom Pressstempel (24) angeordnetes und einen ringförmigen Spalt (22) zum Deckelboden (10) bildendes ringförmiges äußeres Formteil (20),
- wobei der Pressstempel (24) zwischen dem inneren Formteil (18) und dem ringförmigen äußeren Formteil (20) in Richtung des Deckelbodens (10) auf ein sich auf dem Deckelboden befindendes ringartiges Gebilde aus plastifizierter Dichtungsmasse (30) gepresst werden kann, so dass die plastifizierte Dichtungsmasse (30) in den Spalt (22) und radial nach außen durch den ringförmigen Spalt (22) auf den Deckelboden (10) und an die sich an den Deckelboden (10) anschließende Deckelwand (12) gepresst werden kann.

11. Vorrichtung nach Anspruch 10, **dadurch gekennzeichnet, dass** sich das innere Formteil (18) bis auf den Deckelboden (10) erstreckt.

12. Vorrichtung nach Anspruch 10, **dadurch gekennzeichnet, dass** das innere Formteil (18) ebenfalls einen Spalt zum Deckelboden (10) bildet.

13. Vorrichtung nach einem der Ansprüche 10 bis 12, **dadurch gekennzeichnet, dass** zwischen dem ringförmigen äußeren Formteil (20) und der Deckelwand (12) ein ringförmiger Freiraum (28) gebildet ist, durch den die plastifizierte Dichtungsmasse (30) durch den ringförmigen Spalt (22) hindurch in Richtung der Öffnung des Deckels an die Deckelwand (12) gepresst werden kann.

14. Vorrichtung nach Anspruch 13, **dadurch gekennzeichnet, dass** zwischen dem ringförmigen äußeren Formteil (20) und dem dem Deckelboden (10) abgewandten Ende der Deckelwand (12) ein Spalt (27) mit einer Breite von weniger als 0,1 mm, vorzugsweise weniger als 0,05 mm, besteht.

15. Vorrichtung nach einem der Ansprüche 10 bis 14, **dadurch gekennzeichnet, dass** ein an die Deckelwand (12) angrenzender ringförmiger Bereich (16) des Deckelbodens (10) gegenüber einem radial inneren Bereich des Deckelbodens (10) vertieft ist.

## Claims

1. A method for pressing a sealing compound (30) onto the inside of a lid for containers with a lid base (10) and a lid wall (12), wherein an annular structure consisting of plasticized sealing compound (30) is located on the lid base (30) and is pressed flat by means of an annular press punch (24) onto the lid base (10) and onto the lid wall (12) adjacent to the lid base (10), **characterized in that** the annular press punch (24) is pressed between an inner molded part (18) arranged radially to the inside of the press punch (24), and an annular outer molded part (20) arranged radially to the outside of the press punch (24) and forming an annular gap (22) to the lid base (10), and is pressed toward the lid base (10) onto the annular structure consisting of plasticized sealing compound (30), wherein the plasticized sealing compound (30) is pressed into the gap (22) and radially to the outside through the annular gap (22) onto the lid base (10) and onto the lid wall (12) adjacent to the lid base (10).

2. The method according to claim 1, **characterized in that** the inner molded part (18) extends to the lid base (10).

3. The method according to claim 1, **characterized in that** the inner molded part (18) also forms a gap to the lid base (10), and hence the lid base (10) is also coated with sealing compound.

4. The method according to one of the preceding claims, **characterized in that** the plasticized sealing compound (30) is pressed onto the lid wall (12) through the annular gap (22) into an annular free space (28) formed between the annular outer molded part (20) and the lid wall (12) toward the opening in the lid.

5. The method according to claim 4, **characterized in that** a gap (27) with a width less than 0.1 mm, preferably less than 0.05 mm, exists between the annular outer molded part (20) and the end of the lid wall (12) facing away from the lid base (10).

6. The method according to one of the preceding claims, **characterized in that** an annular area (16) of the lid base (10) adjacent to the lid wall (12) is recessed in comparison to an area of the lid base (10) radially to the inside.

7. The method according to one of the preceding claims, **characterized in that** the plasticized sealing compound (30) substantially covers the entire inside of the lid wall (12) after pressing with the annular press punch (24).

8. The method according to one of the preceding claims, **characterized in that** the lid is a lobe-free lid.

9. The method according to one of the preceding claims, **characterized in that** the press punch (24) and/or the inner molded part (18), and/or the outer molded part (20), is cooled to a temperature such that adhesion of the plasticized sealing compound (30) is prevented.

10. A device for pressing a sealing compound (30) onto the inside of a lid for containers with a lid base (10) and a lid wall (12), comprising:
- An annular press punch (24),
- an inner molded part (18) arranged radially to the inside of the press punch (24),
- an annular outer molded part (20) arranged radially to the outside of the press punch (24) and forming an annular gap (22) to the lid base (10),
- wherein the press punch (24) can be pressed toward the lid base (10) between the inner molded part (18) and the annular outer molded part (20) onto an annular structure consisting of plasticized sealing compound (30) located on the lid base so that the plasticized sealing compound (30) is pressed into the gap (22) and radially to the outside through the annular gap (22) onto the lid base (10) and onto the lid wall (12) adjacent to the lid base (10).

11. The device according to claim 10, **characterized in that** inner molded part (18) extends to the lid base (10).

12. The device according to claim 10, **characterized in that** the inner molded part (18) also forms a gap to the lid base (10).

13. The device according to one of claims 10 to 12, **characterized in that** an annular free space (28) is formed between the annular outer molded part (20) and the lid wall (12) through which the plasticized sealing compound (30) can be pressed onto the lid wall (12) through the annular gap (22) toward the opening of the lid.

14. The device according to claim 13, **characterized in that** a gap (27) with a width less than 0.1 mm, preferably less than 0.05 mm, exists between the annular outer molded part (20) and the end of the lid wall (12) facing away from the lid base (10).

15. The device according to one of claims 10 to 14, **characterized in that** an annular area (16) of the lid base (10) adjacent to the lid wall (12) is recessed in comparison to an area of the lid base (10) radially to the inside.

## Revendications

1. Procédé pour le pressage d'une matière d'étanchéité (30) sur le côté intérieur d'un couvercle pour récipient avec un fond de couvercle (10) et une paroi de couvercle (12), dans lequel une structure du genre anneau en matière d'étanchéité plastifiée (30) se trouve sur le fond de couvercle (10), celle-ci étant pressée au moyen d'un poinçon de pressage annulaire (24) à plat sur le fond de couvercle (10) et contre la paroi de couvercle (12) prolongeant le fond de couvercle (10), **caractérisé en ce que** le poinçon de pressage annulaire (24) est pressé sur la structure du genre anneau en matière d'étanchéité plastifiée (30), dans la direction du fond de couvercle (10), entre une pièce moulée intérieure (18) disposée radialement du côté intérieur du poinçon de pressage annulaire (24) et une pièce moulée extérieure annulaire (20) formant une fente annulaire (22) par rapport au fond de couvercle (10) et disposée radialement du côté extérieur du poinçon de pressage annulaire (24), la matière d'étanchéité plastifiée (30) étant pressée dans la fente (22) et radialement vers l'extérieur à travers la fente annulaire (22) sur le fond de couvercle (10) et contre la paroi de couvercle (12) prolongeant le fond de couvercle (10).

2. Procédé selon la revendication 1, **caractérisé en ce que** la pièce moulée intérieure (18) s'étend jusqu'au fond de couvercle (10).

3. Procédé selon la revendication 1, **caractérisé en ce que** la pièce moulée intérieure (18) forme également une fente par rapport au fond de couvercle (10), et le fond de couvercle (10) est par conséquent également recouvert de matière d'étanchéité.

4. Procédé selon l'une des revendications précédentes, **caractérisé en ce que** la matière d'étanchéité plastifiée (30) est pressée à travers la fente annulaire (22) dans un espace libre annulaire (28) formé entre la pièce moulée extérieure annulaire (20) et la paroi de couvercle (12), dans la direction de l'ouverture du couvercle, contre la paroi de couvercle (12).

5. Procédé selon la revendication 4, **caractérisé en ce qu'**une fente (27) d'une largeur inférieure à 0,1 mm, de préférence inférieure à 0,05 mm, apparaît entre la pièce moulée extérieure annulaire (20) et l'extrémité de la paroi de couvercle (12) détournée du fond de couvercle (10).

6. Procédé selon l'une des revendications précédentes, **caractérisé en ce qu'**une région annulaire (16) du fond de couvercle (10) adjacente à la paroi de couvercle (12) est renfoncée par rapport à une région radialement intérieure du fond de couvercle (10).

7. Procédé selon l'une des revendications précédentes, **caractérisé en ce que** la matière d'étanchéité (30) plastifié recouvre quasiment l'ensemble du côté intérieur de la paroi de couvercle (12) après le pressage avec le poinçon de pressage annulaire (24).

8. Procédé selon l'une des revendications précédentes, **caractérisé en ce que** le couvercle est un couvercle sans cames.

9. Procédé selon l'une des revendications précédentes, **caractérisé en ce que** le poinçon de pressage (24) et/ou la pièce moulée intérieure (18) et/ou la pièce moulée extérieure (20) sont refroidis à une température permettant d'empêcher une adhérence de la matière d'étanchéité plastifiée (30).

10. Dispositif pour le pressage d'une matière d'étanchéité (30) sur le côté intérieur d'un couvercle pour récipient avec un fond de couvercle (10) et une paroi de couvercle (12), comprenant:
- un poinçon de pressage annulaire (24),
- une pièce moulée intérieure (18) disposée radialement du côté intérieur du poinçon de pressage (24),
- une pièce moulée extérieure annulaire (20) formant une fente annulaire (22) par rapport au fond de couvercle (10) et disposée radialement du côté extérieur du poinçon de pressage (24),
- dans lequel le poinçon de pressage (24) peut être pressé sur une structure du genre anneau en matière d'étanchéité plastifiée (30) située sur le fond de couvercle, dans la direction du fond de couvercle (10), entre la pièce moulée intérieure (18) et la pièce moulée extérieure annulaire (20), de telle façon que la matière d'étanchéité plastifiée (30) peut être pressée dans la fente (22) et radialement vers l'extérieur à travers la fente annulaire (22) sur le fond de couvercle (10) et contre la paroi de couvercle (12) prolongeant le fond de couvercle (10).

11. Dispositif selon la revendication 10, **caractérisé en ce que** la pièce moulée intérieure (18) s'étend jusqu'au fond de couvercle (10).

12. Dispositif selon la revendication 10, **caractérisé en ce que** la pièce moulée intérieure (18) forme également une fente par rapport au fond de couvercle (10).

13. Dispositif selon l'une des revendications 10 à 12, **caractérisé en ce qu'**un espace libre annulaire (28) est formé entre la pièce moulée extérieure annulaire (20) et la paroi de couvercle (12), à travers lequel la matière d'étanchéité plastifiée (30) peut être pressée à travers la fente annulaire (22) dans la direction de l'ouverture du couvercle, contre la paroi de couvercle (12).

14. Dispositif selon la revendication 13, **caractérisé en ce qu'**une fente (27) d'une largeur inférieure à 0,1 mm, de préférence inférieure à 0,05 mm, apparaît entre la pièce moulée extérieure annulaire (20) et l'extrémité de la paroi de couvercle (12) détournée du fond de couvercle (10).

15. Dispositif selon l'une des revendications 10 à 14, **caractérisé en ce qu'**une région annulaire (16) du fond de couvercle (10) adjacente à la paroi de couvercle (12) est renfoncée par rapport à une région radialement intérieure du fond de couvercle (10).
